# EUROPÄISCHE PATENTSCHRIFT

(11) **EP 1 687 176 B1**
(45) Veröffentlichungstag und Bekanntmachung des Hinweises auf die Patenterteilung: **07.05.2008**
(21) Anmeldenummer: 04820588.4
(22) Anmeldetag: 12.11.2004
(51) Int. Cl.: B60N 2/235

(54) **RASTBESCHLAG FÜR EINEN FAHRZEUGSITZ**
DETENT FITTING FOR A VEHICLE SEAT
MECANISME D'ENCLENCHEMENT POUR UN SIEGE DE VEHICULE

(30) Priorität: 28.11.2003 DE 10355820
(43) Veröffentlichungstag der Anmeldung: 09.08.2006
(73) Patentinhaber: KEIPER GmbH & Co. KG, 67657 Kaiserslautern (DE)
(72) Erfinder: THIEL, Peter, 42899 Remscheid (DE)
(74) Vertreter: Patentanwälte Hosenthien-Held und Dr. Held
(86) Internationale Anmeldenummer: PCT/EP2004/012821
(87) Internationale Veröffentlichungsnummer: WO 2005/061270

(56) Entgegenhaltungen:
- EP-A- 0 967 110
- EP-A- 1 074 426
- EP-A- 1 195 115
- WO-A-00/06414
- WO-A-03/022622
- FR-A- 2 801 850
- US-A1- 2003 155 800
- US-B1- 6 454 354
- US-B1- 6 474 740

## Beschreibung

Die Erfindung betrifft einen Rastbeschlag für einen Fahrzeugsitz, insbesondere für einen Kraftfahrzeugsitz, mit den Merkmalen des Oberbegriffs des Anspruches 1.

Aus der WO 00/44582 A1 ist ein Rastbeschlag bekannt, bei dem zwei vorgespannte, seitlich des Exzenters angeordnete Spiralfedern den Exzenter beaufschlagen, der wiederum zwei Riegel beaufschlagt, und zwar in die Richtung radial nach außen. Die beiden Riegel wirken in ihrer radial äußeren Position mit dem ersten Beschlagteil zusammen, um den Rastbeschlag zu verriegeln. Zum Entriegeln des Rastbeschlags wird der Exzenter durch externe Beaufschlagung entgegen der Vorspannung der Federn gedreht, worauf eine auf dem Exzenter sitzende Steuerscheibe die beiden mit abstehenden Nasen versehenen Riegel radial nach innen zieht. Die WO 00/06414 A1 offenbart einen Rastbeschlag der eingangs genannten Art, der alle Merkmale gemäß dem Oberbegriff des Anspruchs 1 aufweist.

Der Erfindung liegt die Aufgabe zu Grunde, einen Rastbeschlag der eingangs genannten Art zu verbessern, insbesondere die Anzahl der Bauteile zu reduzieren. Diese Aufgabe wird erfindungsgemäß durch einen Rastbeschlag mit den Merkmalen des Anspruches 1 gelöst. Vorteilhafte Ausgestaltungen sind Gegenstand der Unteransprüche.

Die Feder umrundet die Achse, d.h. überstreicht nahezu den gesamten Bauraum, der zwischen den Beschlagteilen definiert ist und innerhalb dessen die für die Verriegelung des Rastbeschlags notwendigen Bauteile angeordnet sind, beispielsweise der Exzenter, die vorgesehenen Riegel und auch die Feder. Dadurch besteht zum einen die Möglichkeit, für die Hauptaufgabe der Feder, d.h. das Beaufschlagen des Exzenters, eine einzige Feder vorzusehen, die den Exzenter wenigstens näherungsweise symmetrisch beaufschlagen kann. Dies reduziert die Anzahl der notwendigen Bauteile. Dabei ist die Feder vorzugsweise an dem die vorgesehenen Riegel führenden zweiten Beschlagteil abgestützt. Zum anderen kann die Feder eine weitere Aufgaben wahrnehmen, nämlich die Riegel nach innen ziehen, was ebenfalls die Anzahl der notwendigen Bauteile reduziert, also die Herstellungskosten verringert und den Einbau erleichtert.

In einer erfindungsgemäßen Anordnung der Bauteile des Rastbeschlags sind der Exzenter radial innen und die vorgesehenen Riegel, in der Regel zwei, radial außen angeordnet. Der von der vorzugsweise vorgespannten Feder beaufschlagte Exzenter drückt die vorgesehenen Riegel zum Zusammenwirken mit dem ersten Beschlagteil radial nach außen, so dass der Rastbeschlag verriegelt. Zum Entriegeln sind die Riegel radial nach innen zu ziehen. Hierfür weist jeder vorgesehene Riegel eine Nase, einen Nocken, einen Vorsprung oder dergleichen auf, die bzw. der beispielsweise aus dem Material des Riegels herausgedrückt ist. Dabei ist die Feder mit wenigstens einer Windung oder einer Schaltkontur radial außerhalb derselben bzw. desselben angeordnet, so dass sie bei einer Bewegung radial nach innen den Riegel mitnehmen kann.

Wenn der Exzenter extern beaufschlagt wird, beispielsweise durch eine im Bereich der Achse angreifende Welle oder dergleichen, wird die Feder zusammengezogen, beispielsweise indem die Feder innen am Exzenter und außen beschlagteilfest angebracht ist. Die sich zusammenziehende Feder zieht dann die vorgesehenen Riegel an ihrer Nase, Nocken, Vorsprung oder dergleichen radial nach innen, beispielsweise direkt mittels der Windung oder mittels einer Schaltkontur.

Die Feder sitzt innen vorzugsweise formschlüssig auf dem Exzenter, um eine gute Mitnahme zu gewährleisten. Dies kann durch Vorsprünge und/oder Aufnahmen verwirklicht sein, auch am inneren Ende der Feder. An die Feder kann auch innen ein Innenring angeformt sein, welcher auf dem Exzenter sitzt und diesen ringförmig umschließt. Auch hier sind vorzugsweise Vorsprünge und/oder Aufnahmen zur Bildung des Formschlusses vorgesehen.

Die Feder ist vorzugsweise aus einem dünnen Federstahlblech spiralförmig ausgestanzt, so daß zugleich die Vorsprünge und/oder Aufnahmen ausgebildet und durch eine Geometrieabweichung zum späteren Einbauzustand eine Vorspannung aufgeprägt werden kann.

Ein erfindungsgemäßer Fahrzeugsitz weist wenigstens einen, vorzugsweise zwei der erfindungsgemäßen Rastbeschläge auf, die beispielsweise mittels einer Übertragungsstange miteinander verbunden sind.

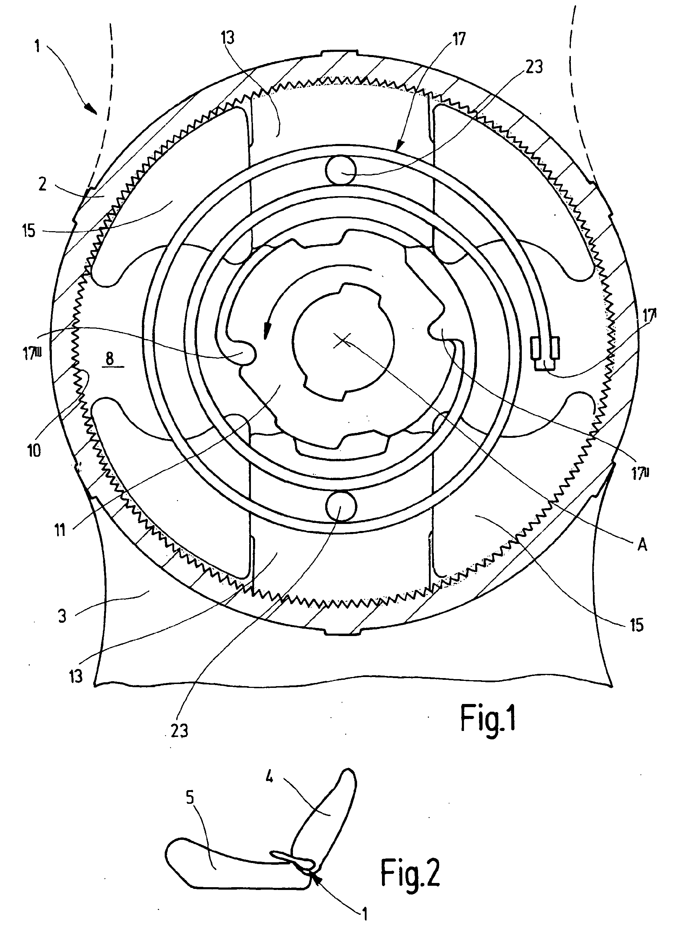

Im folgenden ist die Erfindung anhand zweier in der Zeichnung dargestellter Ausführungsbeispiele näher erläutert. Es zeigen
- Fig. 1: einen Schnitt durch das erste Ausführungsbeispiel,
- Fig. 2: eine schematische Teilansicht eines erfindungsgemäßen Fahrzeugsitzes, und

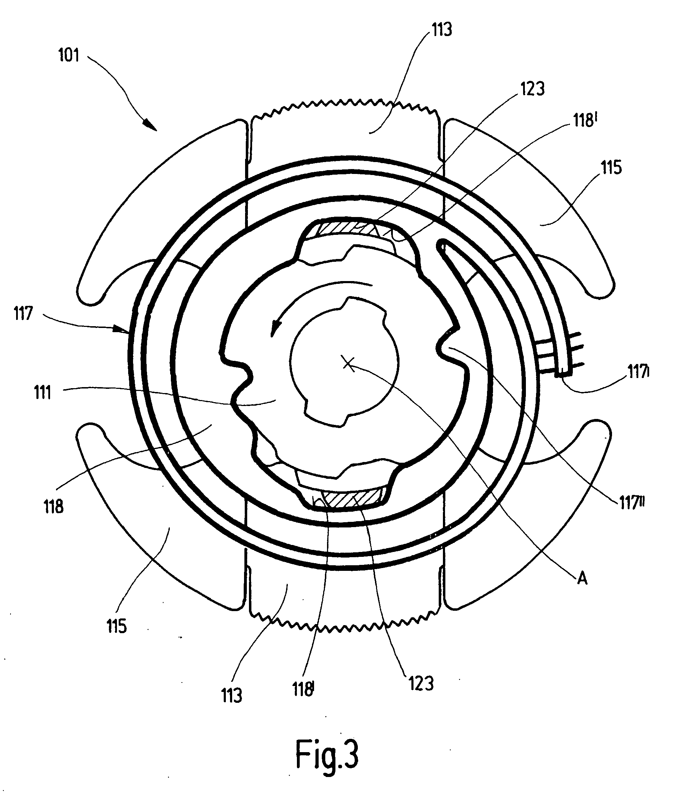

- Fig. 3: einen Schnitt durch Teile des zweiten Ausführungsbeispiels.

Das erste Ausführungsbeispiel betrifft einen Rastbeschlag 1 eines Fahrzeugsitzes für ein Kraftfahrzeug, der ein Beschlagoberteil, im folgenden als erstes Beschlagteil 2 bezeichnet, und ein Beschlagunterteil, im folgenden als zweites Beschlagteil 3 bezeichnet, umfaßt. Auf den beiden Seiten des Fahrzeugsitzes ist je ein Rastbeschlag 1 angeordnet. Die am ersten Beschlagteil 2 befestigte Lehne 4 ist mittels der beiden Rastbeschläge 1 am Sitzteil 5 des Fahrzeugsitzes angebracht. Die beiden Rastbeschläge 1 sind durch eine nicht näher dargestellte Übertragungsstange miteinander verbunden. Für diese und alle nachfolgend nicht näher beschriebenen Einzelheiten wird auf die WO 00/44582 A1 verwiesen, deren Offenbarungsgehalt ausdrücklich einbezogen wird.

Das erste Beschlagteil 2 weist auf seiner dem zweiten Beschlagteil 3 zugewandten Innenseite eine zylindrische Vertiefung auf, welche einen Bauraum 8 zwischen beiden Beschlagteilen 2 und 3 definiert. Die im ersten Beschlagteil 2 ausgebildete, in Umfangsrichtung verlaufende Begrenzungsfläche des Bauraumes 8 trägt einen Zahnkranz 10. Ein Exzenter 11 in Form einer kreisförmigen Scheibe mit zwei punktsymmetrischen Paaren von je zwei Nocken am Außenumfang sitzt innerhalb des Bauraumes 8 auf einem nicht näher dargestellten Mitnehmer, der wiederum drehfest auf der Übertragungsstange sitzt, so daß der Exzenter 11 um eine zentrale Achse A drehbar ist.

In der gleichen Ebene wie der Exzenter 11, aber mit größerem radialen Abstand zur Achse A, sind zwei flache Zahnsegmente, im folgenden als Riegel 13 bezeichnet, innerhalb des Bauraumes 8 angeordnet, die um 180° versetzt (d.h. punktsymmetrisch zueinander) in radialer Richtung beweglich sind. Jeder Riegel 13 trägt an seinem radial äußeren Ende auf seinem Rand eine Verzahnung zum Zusammenwirken mit dem Zahnkranz 10 und ist an seinem radial inneren Ende am Rand mit einer zweinockigen Kontur versehen, welche mit dem als Steuerelement wirkenden Exzenter 11 zusammenwirkt. Die in radialer Richtung verlaufenden Randflächen der Riegel 13 sind über den größten Teil ihrer Länge hinweg parallel zueinander.

Das zweites Beschlagteil 3 weist eine in den Bauraum 8 vorspringende Führung 15 für die in der gleichen Ebene liegenden Riegel 13 auf. Die Führung 15 besteht aus vier spiegelsymmetrisch zueinander angeordneten Segmenten, die paarweise einen Kanal für jeweils einen Riegel 13 bilden, welcher mit seinen parallelen Randflächen an den Seitenwänden des Kanals anliegt. Die Führung 15 dient zugleich der Lagerung des ersten Beschlagteils 2 auf dem zweiten Beschlagteil 3, d.h. das erste Beschlagteil 2 sitzt mit seinem Zahnkranz 10 auf der zylindrisch gekrümmten Außenseite der vier Segmente.

Eine Feder 17, welche aus einem dünnen Federstahlblech von etwa 1 mm Stärke spiralförmig ausgestanzt ist, ist innerhalb des Bauraumes 8 in einer Ebene zwischen derjenigen der Riegeln 13 und der Führung 15 einerseits und der am ersten Beschlagteil 2 vorgesehenen, stirnseitigen Begrenzungsfläche des Bauraums 8 angeordnet, wobei sie die Achse A umrundet. Das äußere Federende 17' der einzigen Feder 17 ist am zweiten Beschlagteil 3 eingeklemmt, eingeclipst oder anderweitig befestigt. Mehrere, radial nach innen weisende Vorsprünge 17" einschließlich eines solchen, der am inneren Federende 17"' vorgesehen ist, sitzen formschlüssig in Aufnahmen auf der Umfangsfläche des Exzenters 11 und können zusätzlich gesichert sein, so daß ein drehfester Sitz der Feder 17 auf dem Exzenter 11 gewährleistet ist. Zwischen den Windungen der Feder 17 sind zwei Nasen 23 angeordnet, von denen jede von einem der Riegel 13 in axialer Richtung absteht. Die Feder 17 ist vorzugsweise mit Vorspannung so eingebaut, daß ohne äußeren Einfluß die Feder 17 den Exzenter 11 so beaufschlagt und um die Achse A dreht, daß dessen Nocken über die Kontur die Riegel 13 radial nach außen in den Zahnkranz 10 drücken, d.h. der Exzenter 11 wird in der in der Zeichnung im Uhrzeigersinn liegenden Drehrichtung beaufschlagt. Der Rastbeschlag 1 ist damit verriegelt.

Wird hingegen der Exzenter 11 mittels der Übertragungsstange um die Achse A gegen den Uhrzeigersinn gedreht, d.h. extern beaufschlagt, was in der Zeichnung durch einen gebogenen Pfeil angedeutet ist, zieht er die Feder 17 zusammen. Optional wird eine nicht näher dargestellte, drehfest auf dem Exzenter 11 sitzende Steuerscheibe gedreht, welche Kulissen für die Nasen 23 aufweist. Die Nasen 23 werden durch die Feder 17 - und optional durch die Steuerscheibe - in radialer Richtung nach innen beaufschlagt, wodurch die Riegel 13 radial nach innen gezogen werden. Der Rastbeschlag 1 ist damit entriegelt, so daß die Lehne 4 relativ zum Sitzteil 5 verschwenkbar ist.

Das zweite Ausführungsbeispiel gleicht dem ersten Ausführungsbeispiel, soweit nachfolgend nicht abweichend beschrieben, weshalb gleiche und gleichwirkende Bauteile um 100 höhere Bezugszeichen tragen. Auch bei diesem Ausführungsbeispiel drückt im Falle ohne äußere Belastung der Exzenter 111 die Riegel 113, welche in der Führung 115 geführt sind, radial nach außen. Für diese Drehung des Exzenters 111 im Uhrzeigersinn ist wieder eine den Exzenter 117 beaufschlagende, spiralförmig ausgebildete, einzige Feder 117 vorgesehen, welche die Achse A umrundet. Das äußere Ende 117' ist wiederum am zweiten Beschlagteil angebracht. Am inneren Ende setzt sich die Feder 117 einstückig in einem Innenring 118 fort, welcher einerseits mittels Vorsprüngen 117" formschlüssig in entsprechende Aufnahmen des Exzenters 11 greift, und andererseits zwei Schaltkonturen 118' aufweist. Jede Schaltkontur 118' ist radial außerhalb eines Nockens 123 angeordnet, welcher aus dem Riegel 113 ausgeprägt ist. Wie im ersten Ausführungsbeispiel, wird bei einer extern eingeleiteten Drehung des Exzenters 111 entgegen dem Uhrzeigersinn die Feder 117 zusammengezogen, wobei sie die Riegel 113 mittels der Schaltkontur 118' und der Nocken 123 radial nach innen zieht, um den Rastbeschlag zu entriegeln.

### Bezugszeichenliste

- 1, 101: Rastbeschlag
- 2: erstes Beschlagteil
- 3: zweites Beschlagteil
- 4: Lehne
- 5: Sitzteil
- 8: Bauraum
- 10: Zahnkranz
- 11, 111: Exzenter
- 13, 113: Riegel
- 15, 115: Führung
- 17, 117: Feder
- 17', 117': äußeres Federende
- 17", 117": Vorsprung
- 17"': inneres Federende
- 23: Nase
- 118: Innenring
- 118': Schaltkontur
- 123: Nocken
- A: Achse

## Patentansprüche

1. Rastbeschlag für einen Fahrzeugsitz, insbesondere für einen Kraftfahrzeugsitz, mit
a) einem ersten Beschlagteil (2),
b) einem zweiten Beschlagteil (3), das relativ zum ersten Beschlagteil (2) beweglich ist,
c) wenigstens einem Riegel (13; 113), der mit dem ersten Beschlagteil (2) zusammenwirkt und vom zweiten Beschlagteil (3) geführt ist, wobei jeder vorgesehene Riegel (13; 113) eine Nase (23) oder einen Nocken (123) oder dergleichen aufweist, welche bzw. welcher in axialer Richtung absteht,
d) einem Exzenter (11; 111), der auf den Riegel (13; 113) einwirkt und um eine Achse (A) drehbar ist, wobei der Exzenter (11; 111) radial innen und die vorgesehenen Riegel (13; 113) radial außen angeordnet sind,
e) und wenigstens einer spiralförmigen Feder (17; 117), die die Achse (A) umrundet und den Exzenter (11; 111) beaufschlagt, wobei der Exzenter (11; 111) bei Beaufschlagung durch die Feder (17; 117) die vorgesehenen Riegel (13; 113) zum Zusammenwirken mit dem ersten Beschlagteil (2) radial nach außen drückt und bei externer Beaufschlagung die Feder (17; 117) zusammenzieht,
**dadurch gekennzeichnet, dass**
f) die Feder (17; 117) mit wenigstens einer Windung oder einer Schaltkontur (118') radial außerhalb der Nase (23) oder des Nockens (123) oder dergleichen angeordnet ist, und
g) die sich zusammenziehende Feder (17; 117) die vorgesehenen Riegel (13; 113) an den Nasen (23) oder Nocken (123) oder dergleichen in radialer Richtung nach innen beaufschlagt und **dadurch** die vorgesehenen Riegel (13; 113) radial nach innen zieht.

2. Rastbeschlag nach Anspruch 1, **dadurch gekennzeichnet, dass** die Feder (17; 117) mit ihrem äußeren Ende (17'; 117') am zweiten Beschlagteil (3) angebracht ist.

3. Rastbeschlag nach Anspruch 1 oder 2, **dadurch gekennzeichnet, dass** die Feder (17; 117) innen formschlüssig auf dem Exzenter (11; 111) sitzt.

4. Rastbeschlag nach Anspruch 3, **dadurch gekennzeichnet, dass** an die Feder (117) innen ein Innenring (118) angeformt ist, welcher auf dem Exzenter (111) sitzt.

5. Rastbeschlag nach einem der vorhergehenden Ansprüche, **dadurch gekennzeichnet, dass** die Feder (17; 117) aus einem dünnen Federstahlblech spiralförmig ausgestanzt ist.

6. Fahrzeugsitz mit einer Lehne (4), welche relativ zu einem Sitzteil (5) in ihrer Neigung einstellbar ist, wobei zur Neigungseinstellung wenigstens ein Rastbeschlag nach einem der vorhergehenden Ansprüche dient.

## Claims

1. A detent fitting for a vehicle seat, in particular for a motor-vehicle seat, with
a) a first fitting part (2),
b) a second fitting part (3) which is movable relative to the first fitting part (2),
c) at least one locking element (13; 113) which interacts with the first fitting part (2) and is guided by the second fitting part (3), wherein each locking element (13; 113) provided has a lug (23) or a cam (123) or the like which projects in an axial direction,
d) an eccentric (11; 111) which acts on the locking element (13; 113) and is rotatable about an axis (A), wherein the eccentric (11; 111) is arranged radially inwardly and the locking elements (13; 113) provided are arranged radially outwardly,
e) and at least one spiral-shaped spring (17; 117) which encircles the axis (A) and acts upon the eccentric (11; 111), wherein the eccentric (11; 111), when acted upon by the spring (17; 117), pushes the provided locking elements (13; 113) radially outwards so that they interact with the first fitting part (2) and, when acted upon externally, tightens the spring (17; 117), **characterised in that**
f) the spring (17; 117) has at least one coil or switching contour (118') arranged radially outside the lug (23) or the cam (123) or the like, and
g) the tightening spring (17; 117) acts upon the lugs (23) or cams (123) of the provided locking elements (13; 113) in a radially inwards direction and thereby pulls the provided locking elements (13; 113) radially inwards.

2. A detent fitting according to claim 1, **characterised in that** the spring (17; 117) is attached by its outer end (17'; 117') to the second fitting part (3).

3. A detent fitting according to claim 1 or 2, **characterised in that** the inside of the spring (17; 117) sits in a form-fitting manner on the eccentric (11; 111).

4. A detent fitting according to claim 3, **characterised in that** an inner ring (118) is integrally formed on the inside of the spring (117) and sits on the eccentric (111).

5. A detent fitting according to any one of the preceding claims, **characterised in that** the spring (17; 117) is punched in the shape of a spiral out of a thin spring-steel sheet.

6. A vehicle seat with a backrest (4) which can be adjusted in its inclination relative to a seat part (5), wherein at least one detent fitting according to any one of the preceding claims is used for adjusting the inclination.

## Revendications

1. - Armature à enclenchement pour un siège de véhicule, en particulier pour un siège de véhicule automobile, comprenant
(a) une première partie d'armature (2),
(b) une seconde partie d'armature (3) qui est mobile par rapport à la première partie d'armature (2),
(c) au moins un verrou (13 ; 113) qui coopère avec la première partie d'armature (2) et est guidé par la seconde partie d'armature (3), chaque verrou prévu (13 ; 113) comprenant un taquet (23) ou une came (123), ou similaires, qui ressort/ressortent dans la direction axiale ;
(d) un excentrique (11 ; 111) qui agit sur le verrou (13 ; 113) et est rotatif autour d'un axe (A), l'excentrique (11 ; 111) étant disposé radialement à l'intérieur et les verrous prévus (13 ; 113) étant disposés radialement à l'extérieur ;
(e) et au moins un ressort en spirale (17 ; 117) qui entoure l'axe (A) et charge l'excentrique (11 ; 111), l'excentrique (11 ; 111) poussant radialement vers l'extérieur lors de la charge par le ressort (17 ; 117) les verrous prévus (13 ; 113), afin de coopérer avec la première partie d'armature (2), et contractant le ressort (17 ; 117) lors de la charge externe,
**caractérisée par le fait que**
(f) le ressort (17 ; 117) est disposé avec au moins un enroulement ou un contour de manoeuvre (118') radialement à l'extérieur du taquet (23) ou de la came (123) ou similaires ; et
(g) le ressort se contractant (17 ; 117) charge vers l'intérieur les verrous prévus (13 ; 113) contre les taquets (23) ou les cames (123) ou similaires en direction radiale vers l'intérieur, et par là tire radialement vers l'intérieur les verrous prévus (13 ; 113).

2. - Armature à enclenchement selon la revendication 1, **caractérisée par le fait que** le ressort (17 ; 117) est posé avec son extrémité externe (17', 117') contre la seconde partie d'armature (3).

3. - Armature à enclenchement selon l'une des revendications 1 ou 2, **caractérisée par le fait que** le ressort (17 ; 117) repose à l'intérieur par ajustement géométrique sur l'excentrique (11 ; 111).

4. - Armature à enclenchement selon la revendication 3, **caractérisée par le fait qu'**une bague intérieure (118) est formée à l'intérieur sur le ressort (117), laquelle bague repose sur l'excentrique (111).

5. - Armature à enclenchement selon l'une quelconque des revendications précédentes, **caractérisée par le fait que** le ressort (17 ; 117) est découpé en spirale dans une mince tôle en acier à ressorts.

6. - Siège de véhicule avec un dossier (4) qui est inclinable par rapport à une partie de siège (5), au moins une armature à enclenchement telle que définie à l'une quelconque des revendications précédentes servant de réglage d'inclinaison.
